# FASCICULE DE BREVET EUROPEEN

(11) **EP 2 716 548 B1**
(45) Date de publication et mention de la délivrance du brevet: **08.08.2018**
(21) Numéro de dépôt: 13186493.6
(22) Date de dépôt: 27.09.2013
(51) Int. Cl.: B64D 47/08, B64C 1/14

(54) **Pointe avant d'engin volant et engin volant associé**
Rumpfnase eines Fluggeräts, und entsprechendes Fluggerät
Nose of a flying vehicle and associated flying vehicle

(30) Priorité: 05.10.2012 FR 1202673
(43) Date de publication de la demande: 09.04.2014
(73) Titulaire: Dassault Aviation, 75008 Paris (FR)
(72) Inventeur: Bouffanais, Fabien, 92290 CHATENAY-MALABRY (FR); De Maqueville, Benoît, 33240 SAINT ANDRE DE CUBZAC (FR); Gavouyere, Olivier, 92100 BOULOGNE-BILLANCOURT (FR); Johan, Zdenek, 92380 GARCHES (FR)
(74) Mandataire: Lavoix

(56) Documents cités:
- EP-A2- 0 511 154
- EP-A2- 0 653 887
- FR-A1- 2 890 643
- US-A- 6 056 237
- US-A1- 2005 099 433
- US-A1- 2006 016 940

## Description

La présente invention concerne une pointe avant d'engin volant selon le préambule de la revendication 1.

Une telle pointe est destinée à être montée sur un engin volant comprenant un ensemble de visualisation muni d'au moins un capteur optique de mesure, tel qu'une caméra infrarouge. Dans le cas d'un avion, le capteur est par exemple disposé en amont du pare-brise du cockpit, afin de faciliter le pilotage de l'engin volant.

La caméra est apte à visualiser le relief situé autour de l'engin volant, et en dessous de celui-ci, notamment lorsque la visibilité à travers le pare-brise du cockpit n'est pas satisfaisante, ou que l'engin volant évolue de nuit.

A cet effet, la caméra est disposée dans la pointe avant de l'engin volant, en regard d'une vitre débouchant axialement par rapport à l'axe de l'engin volant. La caméra est logée dans un chapeau spécifique qui fait saillie par rapport au nez de l'appareil, afin de disposer d'un champ de vision adéquat à l'avant de l'engin volant, et en dessous de celui-ci.

Un tel système est dénommé « système de visualisation amélioré » (ou « Enhanced Vision System » en anglais)

Dans le cas où la courbure de la pointe avant est relativement faible, il est nécessaire de prévoir un chapeau qui dépasse largement au-dessus de cette pointe avant, afin de disposer d'un angle de vision pour l'ensemble de visualisation qui soit suffisant, notamment vers le bas.

Un tel chapeau saillant n'est cependant pas entièrement satisfaisant. En effet, le chapeau est susceptible d'engendrer, dans certains cas, des perturbations du fonctionnement aérodynamique de la pointe avant. En particulier, un décollement de la couche limite se produit en aval du bord supérieur du chapeau, ce qui engendre un effet défavorable sur la trainée de l'avion, ainsi que sur le fonctionnement des sondes anémométriques qui sont fixées sur la zone de la pointe avant.

Par ailleurs, lorsque l'engin volant traverse des conditions givrantes, la présence du chapeau saillant engendre dans certains cas, une accumulation de glace sur le fuselage. Ceci est particulièrement le cas lorsque le système de réchauffage électrique du système de visualisation amélioré ne fonctionne pas.

Par ailleurs, la présence du chapeau saillant augmente le bruit présent dans le cockpit.

FR 2 890 643 décrit une pointe avant d'une arme évoluant dans le domaine supersonique. EP 0 653 887, US 2006/016 940, US 2005/099 433, EP 0 511 154 et US 6 056 237 décrivent des pointes avant selon le préambule de la revendication 1.

Un but de l'invention est donc d'obtenir une pointe avant d'engin volant munie d'un capteur optique d'aide au pilotage et dans laquelle le fonctionnement normal de l'engin volant n'est pas perturbé.

A cet effet, l'invention a pour objet une pointe avant selon la revendication 1.

La pointe avant selon l'invention peut comprendre l'une ou plusieurs des caractéristiques des revendications 2 à 11. L'invention a également pour objet un engin volant selon la revendication 12. L'invention sera mieux comprise à la lecture de la description qui va suivre, donnée uniquement à titre d'exemple, et faite en se référant aux dessins annexés, sur lesquels :
- la figure 1 est une vue en perspective de trois-quarts face d'une première pointe avant d'engin volant selon l'invention ;
- la figure 2 est une vue schématique, prise en coupe partielle suivant un plan vertical médian, de la pointe avant de la figure 1 ;
- la figure 3 est une vue de détail du renfoncement ménagé dans la pointe avant de la figure 1 ;
- la figure 4 est une vue, prise en coupe suivant un plan horizontal, de la fenêtre disposée à l'arrière du renfoncement de la figure 3, et des capteurs situés à l'arrière de la fenêtre ;
- la figure 5 est une vue en coupe dans le plan V de symétrie de la pointe avant représenté sur la figure 2 ;
- la figure 6 est une vue analogue à la figure 5 ;
- la figure 7 est une vue analogue à la figure 1 d'une deuxième pointe avant d'engin volant selon l'invention ;
- la figure 8 est une vue analogue à la figure 2 de la pointe avant de la figure 7 ;
- la figure 9 est une vue analogue à la figure 5 de la pointe avant de la figure 7.

Dans tout ce qui suit, les termes « horizontal », « vertical » s'entendent par rapport à un axe longitudinal de l'engin volant, lorsque l'engin volant est au sol. Les termes « avant », « arrière » s'entendent par rapport aux orientations habituelles de l'engin volant et à son sens de progression en vol.

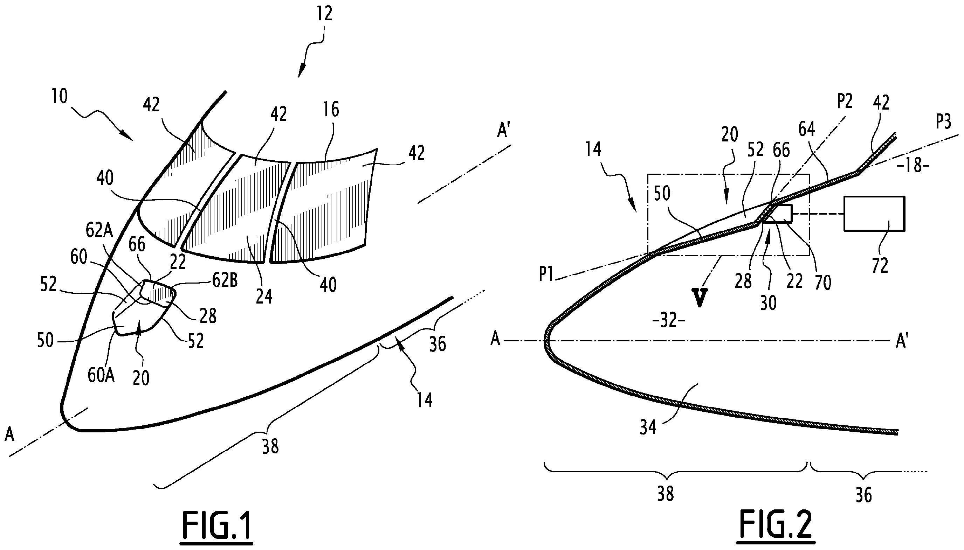

Une première pointe avant 10 d'un engin volant 12 selon l'invention est illustrée par les figures 1 et 2.

L'engin volant 12 est par exemple un avion, notamment un avion civil destiné au transport de passagers et/ou de fret. En variante, l'engin volant 12 est un avion militaire ou encore un drone, comme décrit plus tard.

La pointe avant 10 est montée à l'avant du fuselage (non représenté) de l'engin volant 12, le fuselage portant les ailes et/ou les moteurs de l'engin volant 12.

La pointe avant 10 comporte une enveloppe extérieure 14 définissant une ouverture principale 16 destinée à déboucher dans un cockpit 18 de l'engin volant. Selon l'invention, l'enveloppe 14 délimite en outre, à l'avant de l'ouverture principale 16, un renfoncement 20 et une fenêtre 22 au moins disposée partiellement dans le renfoncement 20.

La pointe avant 10 comporte en outre un pare-brise 24 obturant l'ouverture principale 16 et une vitre 28 obturant la fenêtre 22. Il comporte, selon l'invention, un ensemble 30 de visualisation auxiliaire à travers la fenêtre 22.

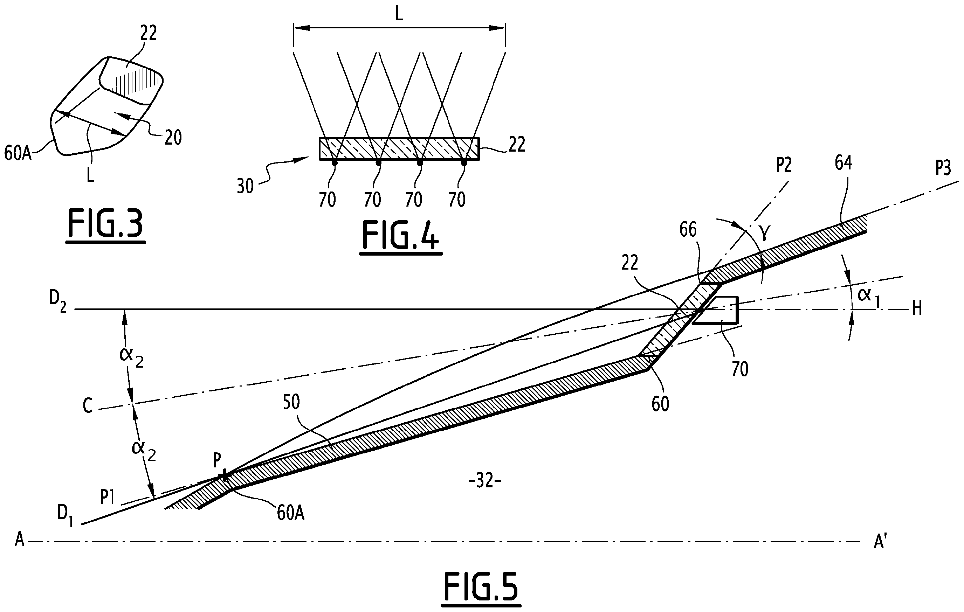

En référence à la figure 4, l'ensemble de visualisation 30 comporte une pluralité de capteurs optiques 70 (quatre dans cet exemple) disposés côte à côte, les bandes de longueur d'onde pour lesquelles chaque capteur 70 est sensible pouvant varier d'un capteur 70 à l'autre de façon à couvrir un spectre plus large (vision nocturne, vision des lampes de pistes, vision dans le brouillard, etc).

De manière connue, l'enveloppe 14 s'étend suivant un axe A-A' horizontal lorsque l'engin volant 12 est posé au sol. Elle présente une forme générale effilée vers l'avant. Elle délimite un volume intérieur 32 définissant le cockpit 18 vers l'arrière, et un espace 34 de stockage d'équipements fonctionnels de l'engin volant 12 vers l'avant.

L'enveloppe 14 définit ainsi une partie arrière 36, située à l'arrière de l'ouverture principale 16 et une partie avant, située à l'avant de l'ouverture principale 16, et formant un nez 38 (« nose cone » en anglais).

La partie arrière 36 présente une section transversale supérieure à celle du nez 38.

L'ouverture principale 16 est ménagée dans la partie arrière 36. L'ouverture principale 16 présente avantageusement une forme incurvée, par exemple en forme de C. Elle est traversée par une pluralité de montants 40 solidaires de l'enveloppe 14 et destinée à supporter le pare-brise 24.

Le pare-brise 24 est formé avantageusement d'une pluralité de panneaux transparents 42 dans le domaine visible (par exemple pour des longueurs d'onde comprises entre 400 nanomètres et 800 nanomètres). Les panneaux 42 obturent totalement l'ouverture principale 16, tout en permettant aux pilotes de l'engin volant 12 de visualiser l'espace situé à l'avant et latéralement autour de l'engin volant 12. Ils sont par exemple formés de verre ou de plexiglas.

Selon l'invention, le renfoncement 20 est disposé sous l'ouverture principale 16, avantageusement à l'avant de celle-ci. Il s'étend axialement dans le nez 38. Il est ménagé ici dans une surface supérieure du nez 38.

Le renfoncement 20 est délimité vers le bas par un plateau 50 sensiblement plan. Le renfoncement 20 est délimité latéralement par des parois latérales 52 s'étendant sensiblement verticalement. Il est délimité vers l'arrière par la fenêtre 22 et par la vitre 28 obturant cette fenêtre 22.

La largeur L (figure 3) du renfoncement 20, dépend du nombre de capteurs 70 que comporte l'ensemble de visualisation 30 et de leur agencement. Cette largeur L est déterminée de façon à ce que la pointe avant de l'engin volant ne constitue pas un obstacle dans le champ de visualisation de ces capteurs. Ce champ de visualisation est représenté schématiquement en vue de dessus sur la figure 4 par l'union des cônes de visualisation de chacun des capteurs 70. Dans l'exemple illustré sur la figure 4, quatre capteurs 70 sont disposés côté à côte pour former l'ensemble de visualisation 30.

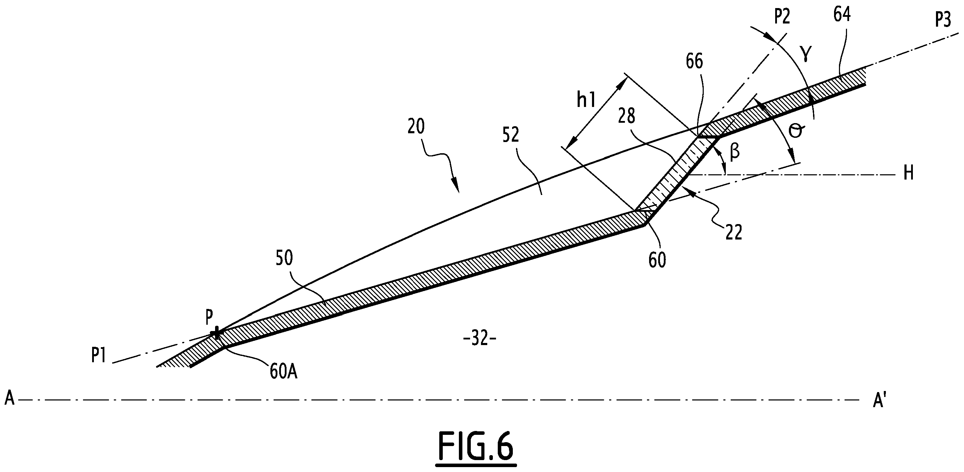

Le plateau 50 est formé par une partie sensiblement plane de l'enveloppe 14. Il s'étend sensiblement dans un plan P1 visible sur les figures 5 et 6 à partir du bord inférieur 60 de la fenêtre 22 jusqu'à un bord avant 60A matérialisé sur la figure 5 par un point P.

Le point P est déterminé géométriquement par l'intersection de l'enveloppe 14 de la pointe avant avec le cône de visée du capteur 70. Sur la figure 5, le cône de visée est délimité par les demi-droites D1 et D2. L'axe optique C du capteur 70 est situé sur la bissectrice de l'angle formé par les demi-droites D1-D2.

L'axe C est incliné d'un angle α₁, ici quelques degrés, du plan horizontal H pour faciliter la vision du sol par le capteur 70.

La détermination du bord avant 60A et donc de la longueur du plateau 50 dépend ainsi de l'implantation des capteurs 70 sur l'avion (et notamment de l'angle d'inclinaison α₁ des capteurs par rapport au plan horizontal H, par exemple 4°) ainsi que des cônes de visée des capteurs 70 et des demi-angles α₂ de ces cônes de visée (par exemple 12°).

La longueur du plateau 50 est généralement supérieure à sa largeur et peut ainsi varier significativement en fonction des caractéristiques des capteurs 70 (implantation et champ de visualisation) et de la courbure de l'enveloppe 14 de la pointe avant 10.

Comme illustré par la figure 3, le bord avant 60A du renfoncement 20 présente une forme convergente vers l'avant, ici une forme pseudo-triangulaire. Cette forme est déterminée par construction, par l'intersection entre l'enveloppe 14 de la pointe avant 10 et le plan passant par la base de la glace 22 et par le point P.

Les parois latérales 52 font saillie sensiblement verticalement à partir du plateau 50. Elles raccordent le plateau aux bords latéraux 62A, 62B de la fenêtre 22. Elles s'étendent sensiblement sur toute la longueur du plateau.

La fenêtre 22 s'étend sensiblement transversalement par rapport à l'axe A-A' dans un plan P2 incliné par rapport à la verticale. Elle est située verticalement au dessous de l'ouverture principale 16, à l'avant de celle-ci.

En référence à la figure 6, l'angle β formé entre le plan P2 défini par la fenêtre 22 et le plan horizontal H doit être aussi réduit que possible pour minimiser les perturbations aérodynamiques et suffisamment important pour éviter des problèmes de diffraction de la lumière traversant la glace 22 et captée par la caméra ce qui nuirait à la qualité de l'image observée.

En pratique, β est par exemple de l'ordre de 50°.

Cette inclinaison permet également à l'ensemble de visualisation 30 de disposer d'un champ de visualisation dégagé à l'avant et vers le bas.

En outre, selon l'invention, grâce à la disposition de la fenêtre 22 dans le renfoncement 20, l'angle *γ* formé par le plan P2 de la fenêtre 22 et par le plan P3 de la région arrière 64 adjacente de l'enveloppe 14, pris tangentiellement au niveau du bord supérieur 66 de la fenêtre 22 est inférieur à 35° et de préférence inférieur à 30° dans un plan axial médian qui correspond au plan vertical passant par l'axe A-A'.

De telles valeurs d'angle *γ* minimisent les perturbations aérodynamiques lors du déplacement de l'engin volant 12 dans une masse d'air.

La fenêtre 22 présente une hauteur h1, prise suivant son plan P2, inférieure à sa largeur, prise entre ses bords 62A, 62B.

La vitre 28 couvre la fenêtre 22. Elle est par exemple réalisée en un matériau transparent au rayonnement infrarouge ou ultraviolet, tel que du verre dont les propriétés optiques sont compatibles avec les caractéristiques techniques des capteurs 70. Elle obture de manière étanche la fenêtre 22.

La vitre 28 est totalement reçue dans le renfoncement 20.

En référence à figure 2, l'ensemble de visualisation 30 comporte quatre capteurs optiques 70 et une unité de traitement 72 raccordée aux capteurs optiques 70 pour afficher une image représentative de l'espace situé à l'avant de l'engin volant 12.

Les capteurs optiques 70 sont montés à l'arrière de la fenêtre 22, par exemple au contact de la vitre 28.

L'unité de traitement 72 est propre à analyser le signal reçu des capteurs 70 pour former une image, et afficher cette image dans le cockpit 18 pour la rendre disponible aux pilotes de l'engin volant 12. L'image est par exemple affichée sur un écran du cockpit, ou sur un dispositif de visualisation tête haute.

Lors d'un vol de l'engin volant 12, la présence d'un renfoncement 20 dans l'enveloppe 14 de la pointe avant 10, logeant au moins partiellement la fenêtre 22, assure une visualisation efficace de l'espace situé à l'avant et en dessous de l'engin volant, à l'aide des capteurs optiques 70, notamment lors des phases d'atterrissage.

De plus, la disposition au moins partielle de la fenêtre 22 et de sa vitre 28 dans le renfoncement 20 minimise les perturbations aérodynamiques sur l'engin volant 12. En particulier, l'enfouissement de la fenêtre 22 et de sa vitre 28 dans le renfoncement 20 élimine sensiblement le sillage décollé qui se produit avec un chapeau notablement saillant par rapport à la surface supérieure du nez 38.

Ainsi, les sondes de mesures anémométriques (non représentées) qui se trouvent dans la zone de la pointe avant 10 ne sont pas perturbées et présentent un fonctionnement adéquat. Il est donc possible à la fois d'améliorer les conditions de pilotage de l'engin volant 12, en offrant une visualisation précise du terrain situé à l'avant de l'engin volant 12, tout en évitant les perturbations aérodynamiques sur l'engin volant 12. De plus, la quantité de glace formée sur la fenêtre 22 en conditions givrantes est réduite lorsque le système de réchauffage est en panne. En outre, le bruit dans le cockpit de l'engin volant 12 est diminué.

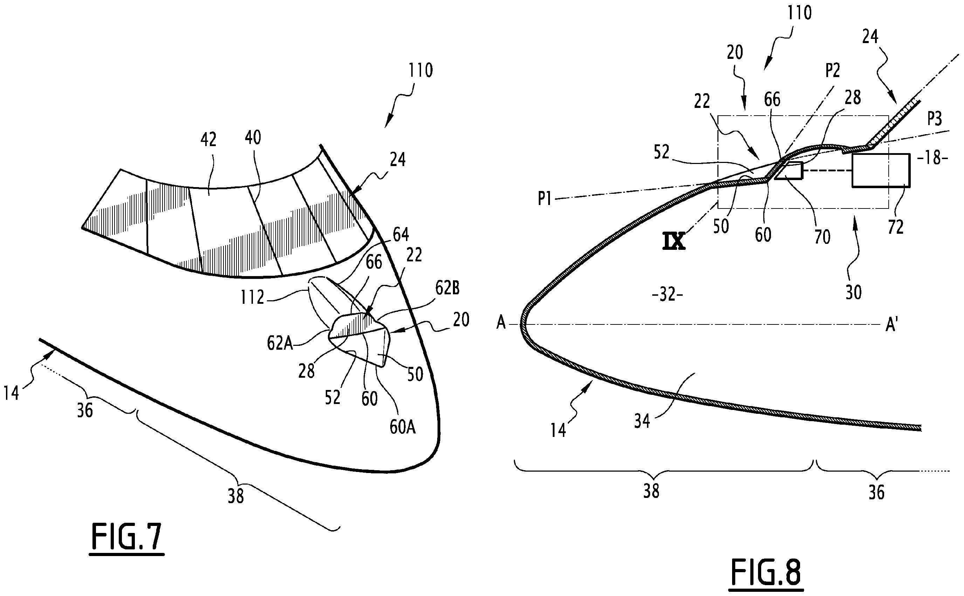

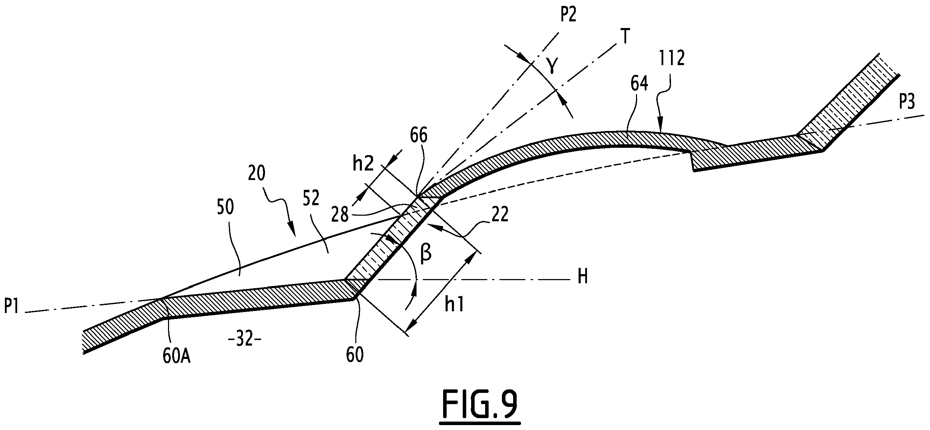

Une deuxième pointe avant 110 selon l'invention est illustrée schématiquement par les figures 7 à 9.

A la différence de la pointe avant 10 représentée sur les figures 1 et 2, la fenêtre 22 est partiellement reçue dans le renfoncement 20, et fait partiellement saillie hors du renfoncement 20.

A cet effet, la région arrière 64 de l'enveloppe 14 forme un chapeau 112 profilé qui s'étend longitudinalement le long de l'axe de l'engin volant et qui fait saillie par rapport aux régions latérales adjacentes. Dans cet exemple, le chapeau 112 présente une courbure convexe dirigée vers le haut.

Avantageusement, au moins 30% de la surface de la fenêtre 22 est disposée dans le renfoncement, par exemple 50%.

Le fonctionnement de la pointe avant 110 est par ailleurs analogue à celui de la pointe avant 10. Cependant, cette pointe avant 110 est particulièrement adaptée aux pointes avant présentant un diamètre réduit en permettant une transition plus progressive de la pente entre la partie avant et la partie arrière de la pointe 110 ce qui évite la création d'un décollement malgré la saillie partielle de la fenêtre 22.

En variante, l'ensemble de visualisation 30 comporte un nombre de capteurs différents de quatre et/ou des capteurs disposés selon un agencement différent de celui de l'exemple illustré, voire ne comporte qu'un seul capteur. En particulier, pour certains agencements de capteurs, les bords latéraux 62A et 62B de la fenêtre 22 sont plus longs que le bord inférieur 60 et le bord supérieur 66 de cette fenêtre.

En variante, la fenêtre 22 est disposée sous le nez 38, du côté opposé à l'ouverture 16, dans une surface inférieure de la pointe avant 10, 110.

Dans une autre variante, l'engin volant 12 est un drone, il est alors dépourvu d'ouverture principale 16 débouchant dans un cockpit 18 et les images obtenues par l'ensemble de visualisation 30 sont enregistrées ou transmises à distance à une station sol.

Dans une autre variante encore, la vitre 28 n'est pas un élément séparé de l'ensemble de visualisation 30 mais est intégrée à cet ensemble.

Plus généralement, chaque capteur 70 est disposé à l'arrière de la vitre 22, soit en étant intégré ou appliqué contre la vitre 22, soit en étant disposé à l'écart de la vitre 22.

Comme il résulte de la description qui précède et de la figure 6, l'angle θ formé entre le plan P2 défini par la fenêtre 22 et le plan P1 du plateau 50 est non nul, et est avantageusement supérieur à 10°.

De même, l'angle γ entre le plan P2 de la fenêtre 22 et le plan P3 de la région arrière adjacente 64 de l'enveloppe 14 est non nul et est avantageusement supérieur à 10°.

## Revendications

1. Pointe avant (10 ; 110) d'engin volant (12), comprenant :
- une enveloppe (14) délimitant un nez (38) s'étendant suivant un axe longitudinal (A-A'), l'enveloppe (14) délimitant une fenêtre (22), et un renfoncement (20), le renfoncement (20) étant ménagé dans une surface supérieure du nez (38) ;
**caractérisé par** :
- une vitre (28) d'obturation de la fenêtre (22) s'étendant transversalement par rapport à l'axe longitudinal (A-A') ;
- un capteur optique (70), notamment une caméra, disposée dans l'enveloppe (14) à l'arrière de la vitre (28),
la fenêtre (22) obturée par la vitre (28) étant au moins partiellement disposée dans le renfoncement (20), le capteur optique (70) présentant un axe optique incliné vers le bas par rapport à un plan horizontal.

2. Pointe avant (10 ; 110) selon la revendication 1, **caractérisée en ce que** le renfoncement (20) s'étend axialement dans le nez (38).

3. Pointe avant (10 ; 110) selon l'une quelconque des revendications 1 ou 2, **caractérisée en ce que** la fenêtre (22) est disposée à l'arrière du renfoncement (20).

4. Pointe avant (10 ; 110) selon la revendication 3, **caractérisée en ce que** le renfoncement (20) est délimité à l'arrière par la fenêtre (22) et par la vitre (28) obturant la fenêtre (22).

5. Pointe avant (10 ; 110) selon l'une quelconque des revendications précédentes, **caractérisée en ce que** le renfoncement (20) est délimité vers le bas par un plateau inférieur (50) sensiblement plan.

6. Pointe avant (10 ; 110) selon la revendication 5, **caractérisée en ce que** le renfoncement (20) est délimité latéralement par deux parois latérales (52) s'étendant sensiblement verticalement.

7. Pointe avant (110) selon l'une quelconque des revendications précédentes, **caractérisée en ce que** la fenêtre (22) est délimitée par un bord supérieur (66), l'angle (*γ*) formé entre le plan (P2) de la fenêtre (22) adjacent au bord supérieur (66), et le plan (P3) d'une région arrière (64) de l'enveloppe (14) adjacent au bord supérieur (66), dans un plan axial médian, étant inférieur à 35°.

8. Pointe avant (10) selon l'une quelconque des revendications précédentes, **caractérisée en ce que** la fenêtre (22) obturée par la vitre (28) fait partiellement saillie hors du renfoncement (20).

9. Pointe avant (10 ; 110) selon l'une quelconque des revendications 1 à 7, **caractérisée en ce que** la fenêtre (22) obturée par la vitre (28) est totalement reçue dans le renfoncement (20), sans faire saillie au-delà du renfoncement (20).

10. Pointe avant (10 ; 110) selon l'une quelconque des revendications précédentes, **caractérisée en ce qu'**elle définit une ouverture principale (16) située au-dessus du nez et destinée à s'ouvrir dans un cockpit (18), la pointe avant (10 ; 110) comportant un pare-brise (24) obturant l'ouverture principale (16), et la fenêtre (22) étant avantageusement disposée en dessous de l'ouverture principale (16).

11. Pointe avant (10 ; 110) selon l'une quelconque des revendications précédentes, **caractérisé en ce que** le renfoncement (20) présente un bord avant (60A) de forme convergente vers l'avant, avantageusement de forme sensiblement triangulaire.

12. Engin volant (12), **caractérisé en ce qu'**il comporte une pointe avant (10 ; 110) selon l'une quelconque des revendications précédentes.

## Patentansprüche

1. Vordere Spitze (10; 110) eines Fluggeräts (12), aufweisend:
- eine Hülle (14), welche eine Nase (38) begrenzt, die sich entlang einer Longitudinalachse (A-A') erstreckt, wobei die Hülle (14) ein Fenster (22) und eine Vertiefung (20) begrenzt, wobei die Vertiefung (20) an einer oberen Fläche der Nase (38) vorgesehen ist,
**gekennzeichnet durch**:
- eine Scheibe (28) des Verschließens des Fensters (22), welche sich bezüglich der Longitudinalachse (A-A') transversal erstreckt,
- einen optischen Sensor (70), insbesondere eine Kamera, welcher an der Hülle (14) hinter der Scheibe (28) angeordnet ist,
wobei das Fenster (22), welches durch die Scheibe (28) verschlossen ist, zumindest partiell an der Vertiefung (20) angeordnet ist, wobei der optische Sensor (70) eine optische Achse aufweist, welche bezüglich einer Horizontalebene nach unten geneigt ist.

2. Vordere Spitze (10; 110) gemäß Anspruch 1, **dadurch gekennzeichnet, dass** sich die Vertiefung (20) axial an der Nase (38) erstreckt.

3. Vordere Spitze (10; 110) gemäß irgendeinem der Ansprüche 1 oder 2, **dadurch gekennzeichnet, dass** das Fenster (22) hinter der Vertiefung (20) angeordnet ist.

4. Vordere Spitze (10; 110) gemäß Anspruch 3, **dadurch gekennzeichnet, dass** die Vertiefung (20) hinten durch das Fenster (22) und durch die Scheibe (28) begrenzt ist, welche das Fenster (22) verschließt.

5. Vordere Spitze (10; 110) gemäß irgendeinem der vorhergehenden Ansprüche, **dadurch gekennzeichnet, dass** die Vertiefung (20) nach unten durch eine untere Ebene (50) begrenzt ist, welche im Wesentlichen eben ist.

6. Vordere Spitze (10; 110) gemäß Anspruch 5, **dadurch gekennzeichnet, dass** die Vertiefung (20) lateral durch zwei Lateralwände (52) begrenzt ist, welche sich im Wesentlichen vertikal erstrecken.

7. Vordere Spitze (10; 110) gemäß irgendeinem der vorhergehenden Ansprüche, **dadurch gekennzeichnet, dass** das Fenster (22) durch einen oberen Rand (66) begrenzt ist, wobei der Winkel (γ), welcher zwischen der Ebene (P2) des Fensters (22) benachbart am oberen Rand (66) und der Ebene (P3) eines Bereichs (64) hinter der Hülle (14) benachbart am oberen Rand (66) an einer Axial-Mittelebene geformt ist, kleiner als 35° ist.

8. Vordere Spitze (10; 110) gemäß irgendeinem der vorhergehenden Ansprüche, **dadurch gekennzeichnet, dass** das Fenster (22), welches durch die Scheibe (28) verschlossen ist, partiell einen Vorsprung außerhalb der Vertiefung (20) bildet.

9. Vordere Spitze (10; 110) gemäß irgendeinem der Ansprüche 1 bis 7, **dadurch gekennzeichnet, dass** das Fenster (22), welches durch die Scheibe (28) verschlossen ist, vollständig in die Vertiefung (20) zurückgenommen ist, ohne einen Vorsprung jenseits der Vertiefung (20) zu bilden.

10. Vordere Spitze (10; 110) gemäß irgendeinem der vorhergehenden Ansprüche, **dadurch gekennzeichnet, dass** sie eine Hauptöffnung (16) definiert, welche über der Nase (38) angeordnet ist und bestimmt ist, um zu einem Cockpit (18) offen zu sein, wobei die vordere Spitze (10; 110) eine Frontscheibe (24) aufweist, welche die Hauptöffnung (16) verschließt, wobei das Fenster (22) vorzugsweise unter der Hauptöffnung (16) angeordnet ist.

11. Vordere Spitze (10; 110) gemäß irgendeinem der vorhergehenden Ansprüche, **dadurch gekennzeichnet, dass** die Vertiefung (20) einen vorderen Rand (60A) in einer in Richtung nach vorne konvergierenden Form aufweist, vorzugsweise im Wesentlichen in dreieckiger Form.

12. Fluggerät (12), **dadurch gekennzeichnet, dass** es eine vordere Spitze (10; 110) gemäß irgendeinem der vorhergehenden Ansprüche aufweist.

## Claims

1. A nose section (10; 110) for a flying machine (12), comprising:
- an enclosure (14) delimiting a nose cone (38) extending along a longitudinal axis (A-A'), the enclosure (14) delimiting a window (22) and a recess (20), the recess (20) being formed in an upper surface of the nose cone (38);
**characterized by** :
- a glass (28) closing the window (22) extending transversely relative to the longitudinal axis (A-A');
- an optical sensor (70), in particular a camera, positioned in the enclosure (14) behind the glass (28),
the window (22) covered by the glass (28) being at least partially positioned in the recess (20), the optical sensor (70) having an optical axis inclined downwardly with regard to a horizontal plane.

2. The nose section (10; 110) according to claim 1, **characterized in that** the recess (20) extends axially in the nose cone (38).

3. The nose section (10; 110) according to any one of claims 1 or 2, **characterized in that** the window (22) is positioned at the back of the recess (20).

4. The nose section (10; 110) according to claim 3, **characterized in that** the recess (20) is delimited rearwardly by the window (22) and the plane (28) closing the window (22).

5. The nose section (10; 110) according to any one of the preceding claims, **characterized in that** the recess (20) is downwardly delimited by a substantially planar lower plate (50).

6. The nose section (10; 110) according to claim 5, **characterized in that** the recess (20) is laterally delimited by two side walls (52) extending substantially vertically.

7. The nose section (110) according to any one of the preceding claims, **characterized in that** the window (22) is delimited by an upper edge (66), the angle (*γ*) formed between the plane (P2) of the window (22) adjacent to the upper edge (66) and the plane (P3) of a rear region (64) of the enclosure (14) adjacent to the upper edge (66), in a median axial plane, being smaller than 35°.

8. The nose section (10) according to any one of the preceding claims, **characterized in that** the window (22) covered by the glass (28) partially protrudes outside the recess (20).

9. The nose section (10; 110) according to any one of claims 1 to 7, **characterized in that** the window (22) covered by the glass (28) is completely included in the recess (20), without protruding beyond the recess (20).

10. The nose section (10; 110) according to any one of the preceding claims, **characterized in that** it defines a primary opening (16) situated above the nose cone and designed to open into a cockpit (18), the nose section (10; 110) including a windshield (24) covering the primary opening (16), and the window (22) advantageously being positioned below the primary opening (16).

11. The nose section (10; 110) according to any one of the preceding claims, **characterized in that** the recess (20) has a front edge (60A) with a forwardly converging shape, advantageously a substantially triangular shape.

12. A flying machine (12), **characterized in that** it includes a nose section (10; 110) according to any one of the preceding claims.
